# EUROPEAN PATENT APPLICATION

(11) **EP 1 193 906 A2**
(43) Date of publication of application: **03.04.2002**
(21) Application number: 01120782.6
(22) Date of filing: 10.09.2001
(51) Int. Cl.: H04L 12/24, H04L 29/06

(54) **Filter deployment method and agent for event channel networks**

(30) Priority: 27.09.2000 US 671455
(71) Applicant: Telefonaktiebolaget L M Ericsson (Publ), 126 25 Stockholm (SE)
(72) Inventor: Desrochers, Stephane, Blainwill, Quebec J7B 1K3 (CA); Tse, Edwin, Montreal, Quebec H3W 1T7 (CA); Gosselin, Nicolas, Blainwille, Quebec J7C 4Y1 (CA)
(74) Representative: HOFFMANN - EITLE

(57) **Abstract**

A method and Agent for deploying new filter constraints in a plurality of network-filters in an Event Channel Network (ECN). When a consumer is added or deleted, or if event types subscribed to by a consumer change, the Agent calculates the filter constraints and their placement in the ECN. The Agent includes a network model having a plurality of model-filters corresponding to network-filters in the ECN. The Agent identifies the model-filters affected by the new filter constraints, and passes the new filter constraints to the network-filters corresponding to the identified model-filters. Each network-filter sends a bleeder message downstream with its identifier. When a network-filter has received all required bleeder messages from upstream network-filters, it activates the new filter constraints and sends an all-bleeders-detected message to the Agent. When all of the network-filters requiring new constraints have sent an all-bleeders-detected message to the Agent, the Agent provides a go-ahead to the requesting consumer, and establishes a contract with the requesting consumer to deliver the requested event type(s).

## Description

### BACKGROUND OF THE INVENTION

### Technical Field of the Invention

This invention relates to telecommunication systems and, more particularly, to a method and Agent for deploying filter constraints in network filters in order to optimize the network.

### Description of Related Art

An Event Channel Network (ECN) is a set of connected processes for distributing messages (events) from event producers to event consumers. The ECN is used in networks such as telecommunication networks, e-mail networks, data networks, and their management networks. The ECN can be modeled as a set of nodes and links, with each link connecting two nodes. Each node may utilize a plurality of links to connect to a plurality of other nodes. Events flow via links from one node to another. The event flows are uni-directional, and the nodes are connected so that no events can flow in a loop. Producers and consumers are modeled as nodes as well.

A producer submits events of one or more event types to the ECN. A consumer subscribes through the ECN to receive events of one or more event types. When the ECN agrees with the consumer to a particular subscription request, it is said that there is a "contract" established between the ECN and the consumer. By this contract, the ECN guarantees that events of the type subscribed to by the consumer, and produced after the contract is established, will be sent to the consumer. In addition, the ECN guarantees that it will not send unwanted event types to the consumer (i.e., event types to which the consumer does not subscribe).

ECN nodes and consumer nodes have the capability to filter events based on event types. The filter capability is modeled as a process associated with a link. This filter capability is characterized by its associated filter constraint. By setting a particular filter constraint for a filter, the filter can be made to discard events of certain event types. A filter may contain no filter constraint. In this case, events of all types pass through the filter. In the other extreme, a filter may contain a filter constraint that does not allow any events to pass through.

Based on ECN topology, including producers and the types of events they offer, and consumers and the types of events they subscribe to, numerous filter configurations (i.e., filter constraints of each filter and the placement of filters on links of the ECN) can be made to guarantee the contracts with consumers. It is also desirable that the filter configurations optimize the use of network resources. Some configurations, however, do not optimize the use of network resources. For example, the contracts with consumers can be guaranteed if no constraints are placed in any ECN filters except the filters that are associated with links directly connected to the consumers. However, such a configuration is not optimal in terms of ECN bandwidth usage and filter processing.

The Object Management Group (OMG) has published a specification regarding a Notification Service and Event Channel Networks. The Notification Service published by OMG includes a solution that facilitates the construction of an optimal ECN network. The OMG solution requires control messages to be transmitted between filters using the same links that carry events (i.e., in-band signaling). In-band signaling, however, consumes valuable bandwidth that could otherwise be used for carrying events.

Other state-of-the-art solutions use out-of-band signaling for control messages. In these schemes, a managing entity sends control messages to filters requesting them to change their filter constraints so that an optimal network will result. However, while the managing entity and the filters are interacting to change filter constraints, the contract to each consumer may not be guaranteed.

In order to overcome the disadvantage of existing solutions, it would be advantageous to have a method of deploying filter constraints in network filters that minimizes the use of in-band signaling while continuing to guarantee the contract to each consumer during the deployment of the filter constaints. The present invention provides such a method.

### SUMMARY OF THE INVENTION

In one aspect, the present invention is a method of deploying new filter constraints in a plurality of network-filters in an Event Channel Network (ECN) in which an Agent calculates the filter constraints and their placement in the ECN. A network model that includes a plurality of model-filters is implemented in the Agent. Each model-filter has a corresponding network-filter in the ECN. The Agent identifies the model-filters affected by the new filter constraints, and passes the new filter constraints to the network-filters corresponding to the identified model-filters. The method may also include the steps of receiving in each network-filter, a confirmation that all of the network-filter's upstream network-filters have received the new filter constraints; and activating the new filter constraints in the network-filters. If the new filter constraints are necessitated by a new event type requested by a consumer, the method may further comprise the steps of providing by the Agent, a go-ahead to the requesting consumer; and establishing a contract with the requesting consumer to deliver the requested event type.

In another aspect, the present invention is a method of deployingnew filter constraints in a plurality of network-filters in an ECN in which an Agent calculates the filter constraints and their placement in the ECN. The method includes implementing in the Agent, a network model that includes a plurality of model-filters, each model-filter having a corresponding network-filter in the ECN, an associated Send-flag indicating whether the model-filter's corresponding network-filter should send a bleeder message, an associated Bag containing identifiers of upstream network-filters that will send bleeder messages, and an associated Confirm-flag indicating whether the Agent has received an all-bleeders-detected message from the corresponding network-filter. Each Send-flag and Confirm-flag are initialized to FALSE, and each Bag is initialized to EMPTY. For each subject model-filter in the network model, the method also includes finding all downstream model-filters, placing an identifier of the subject model-filter in the Bag of each found downstream model-filter, and setting the subject model-filter's Send-flag to TRUE. This is followed by passing a new filter constraint to each network-filter corresponding to each model-filter having an identifier in its Bag, and instructing each network-filter corresponding to a model-filter having its Send-flag set to TRUE to send a bleeder message with the sending network-filter's identifier to downstream network-filters. The Agent then instructs each network-filter receiving a new filter constraint to watch for bleeder messages containing identifiers that are in the Bag of the network-filter's corresponding model-filter. The Agent also instructs each network-filter receiving a new filter constraint to activate the new filter constraint when the network-filter has received all required bleeder messages. When the new filter constraints have been activated in all the network-filters, the Agent sends a go-ahead to the requesting consumer, and a contract is established.

In yet another aspect, the present invention is an Agent for calculating aid deploying new filter constraints in a plurality of network-filters in an Event Channel Network (ECN). The Agent includes a network model that includes a plurality of model-filters, each model-filter having a corresponding network-filter in the ECN; means for identifying the model-filters affected by the new filter constraints; and means for passing the new filter constraints to the network-filters corresponding to the identified model-filters.

### BRIEF DESCRIPTION OF THE DRAWINGS

The invention will be better understood and its numerous objects and advantages will become more apparent to those skilled in the art by reference to the following drawings, in conjunction with the accompanying specification, in which:
FIG. 1 is a simplified block diagram of an Event Channel Network (ECN) suitable for implementing the method of the present invention;
FIG. 2 is a simplified block diagram of an Agent that calculates and deploys filter constraint(s) in the ECN;
FIGS. 3A-3C are a flow chart illustrating the steps of the preferred embodiment of the method of the present invention; and
FIG. 4 is a flow chart illustrating the steps of Procedure-A, a subroutine in FIG. 3A.

### DETAILED DESCRIPTION OF EMBODIMENTS

An optimal network is defined as having the following two characteristics:
1. The deployed filter constraints minimize event traffic. If any event is allowed to flow (and is not filtered and discarded) from Node-A to Node-B, then there must exist at least one consumer connected down stream of Node-B (or directly connected to Node-B) that has subscribed to that event type.
2. There are no useless filters or filter constraints. Useless filter constraints are those that are deployed and yet are not expected to match and discard any events.

The present invention uses a mixture of in-band and out-of-band signaling to deploy filter constraints in network filters. The invention uses network bandwidth to carry control messages (i.e., bleeder messages) only for new filter constraint activation. This bandwidth requirement is significantly less than what is required by existing systems that use network bandwidth to carry control messages for the calculation, placement, and activation of new filter constraints. Other existing solutions use out-of-band signaling for the calculation and placement of new filter constraints, but cannot guarantee the contracts between consumers and the network. The present invention optimizes the network while continuing to guarantee the contract to each consumer during filter-constraint deployment.

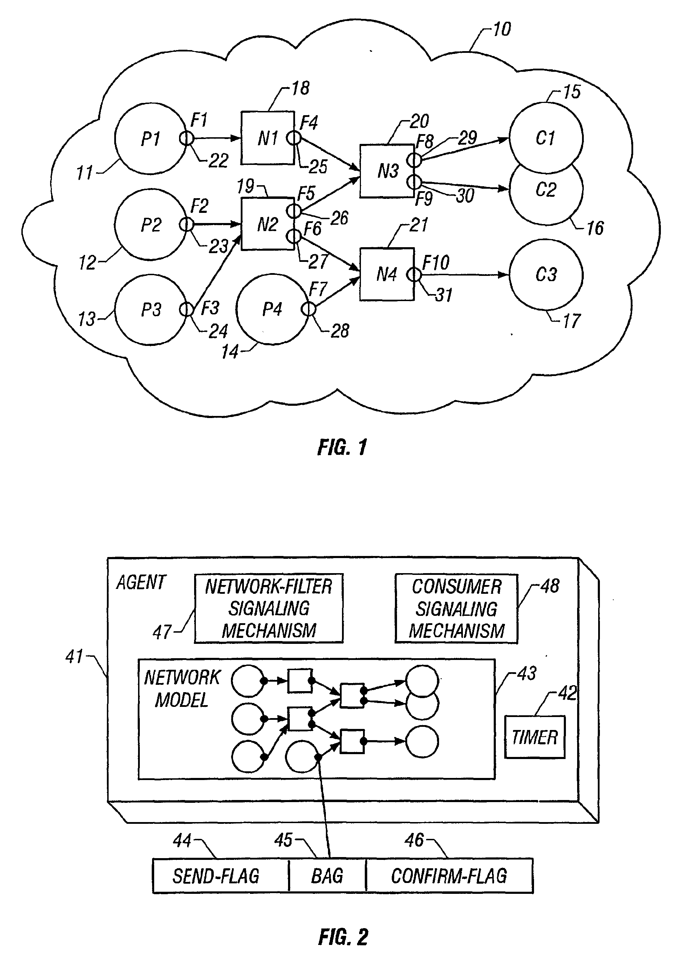

FIG. 1 is a simplified block diagram of an Event Channel Network (ECN) 10 suitable for implementing the method of the present invention. The ECN is a set of connected processes for distributing messages (events) from a plurality of event producers P1-P4 (11-14) to a plurality of event consumers C1-C3 (15-17). A plurality of inter-connecting network nodes N1-N4 (18-21) are connected between the producers and the consumers. Each of the producers and interconnecting nodes is illustrated as having one or more associated event filters F1-F10 (22-31) which filter the events that are passed over the downstream link from each node.

If the network is completely static, i.e., the topology remains unchanged, all offered event types remain unchanged, and all event types subscribed to remain unchanged, then there is no need to calculate a new set of filter constraints and therefore no need for filter constraint deployment. However, networks are never completely static, and there is a continuing need to re-optimize the filter configuration.

FIG. 2 is a simplified block diagram of an Agent 41 that calculates and deploys filter constraint(s) in the network. The Agent includes a timer 42 and a model 43 of the network. The network model includes the ECN (nodes, links, and associated filters), all event producers with the event types that they offer, and all consumers with the event types to which they subscribe. For clarity, filters in the network are referred to as "network-filters", and associated filters in the Agent's network model that emulate the network-filters are referred to as "model-filters". The network-filters requiring new filter constraints are referred to as Set-A, and the corresponding model-filters are referred to as Set-B. If a consumer is added or deleted, or if the event types subscribed to by a consumer change, the network is assumed not optimal. In this situation, the Agent must calculate new filter constraints, and subsequently may need to deploy (remove, modify, or add) filter constraint(s) in the network to re-optimize the network.

The Agent maintains an association for each model-filter in Set-B with a Send-flag 44, a Bag 45, and a Confirm-flag 46. The Send-flag indicates whether the model-filter's corresponding network-filter (represented by the filter in Set-A) should send a special message called a "bleeder message". The bleeder message contains an identifier of the subject network-filter. The Bag contains identifiers of upstream network-filter(s) that will emit bleeder message(s). The Confirm-flag indicates whether the Agent has received an "all-bleeders-detected" message from the corresponding network-filter. The Agent initializes the Send-flag and Confirm-flag to FALSE, and initializes the Bag to EMPTY for each model-filter in Set-B. The Agent communicates with network-filters utilizing a network-filter signaling mechanism 47, and communicates with consumers utilizing a consumer signaling mechanism 48.

In general, when a consumer is added or deleted, or if event types subscribed to by a consumer change, the Agent 41 calculates new filter constraints and their placement in the network. When a new filter constraint needs to be deployed in the network, the Agent uses the network model 43 to identify all of the affected model-filters leading to the requesting consumer. The filter constraints are then passed to corresponding network-filters, and the network-filters are instructed by the Agent to send their identifier to downstream network-filters in a bleeder message. When all required bleeder messages are received in a network-filter, the filter activates the new filter constraints and sends the Agent a confirmation known as an all-bleeders-detected message. When all of the network-filters have responded, the Agent provides a go-ahead to the requesting consumer, and the contract is established.

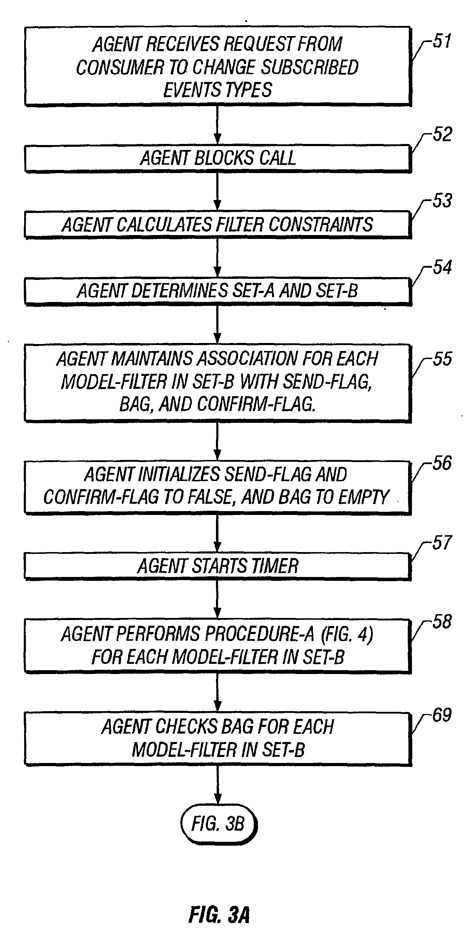

FIGS. 3A-3C are a flow chart illustrating the steps of the preferred embodiment of the method of the present invention. The method assumes that a new set of filter constraints and their placements have been calculated by the Agent 41. At step 51, the Agent receives a request from a consumer to change subscribed event types, or the Agent receives a request from a newly added consumer who wants to subscribe to certain event types. At step 52, the Agent blocks the call (i.e., does not respond to the requesting consumer with a go-ahead or not) until later in the method Therefore, the ECN does not enter into a contract with the requesting consumer until the method is completed.

At step 53, the Agent 41 utilizes the network model 43 to calculate filter constraints of all network-filters based on the existing network topology, the producers and the event types they offer, and the consumers and the event types to which they subscribe, including the new request. At step 54, the Agent determines Set-A (the set of network-filters whose filter constraints need modification) and Set-B (the corresponding model-filters in the Agent's memory). At step 55, it is noted that the Agent maintains the association for each model-filter in Set-B with a Send-flag 44, a Bag 45, and a Confirm-flag 46. At step 56, the Agent initializes the Send-flag and Confirm-flag for each model-filter to FALSE, and initializes the bag for each model-filter to be empty.

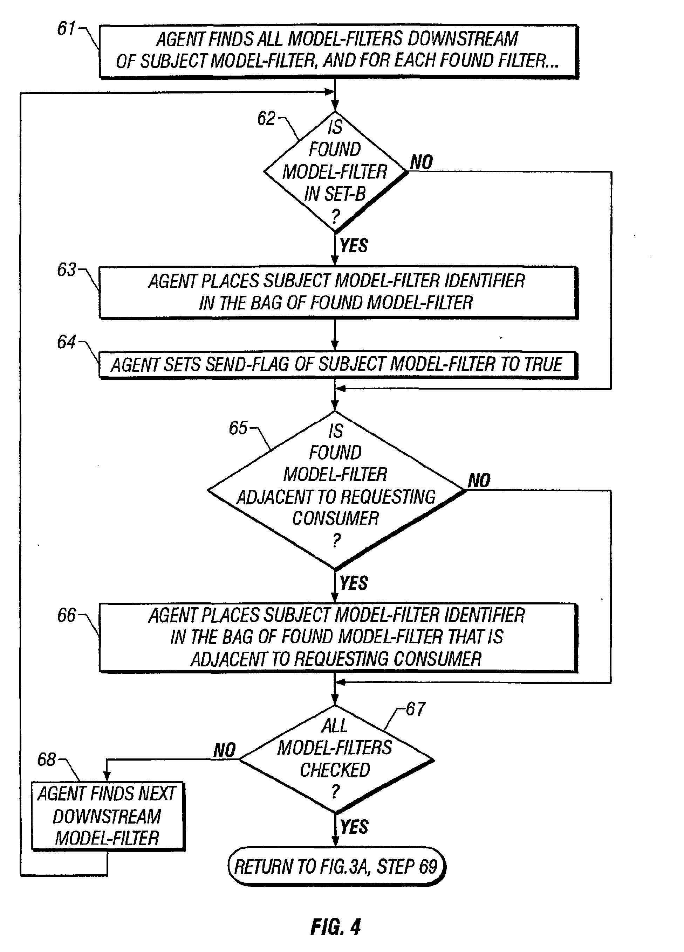

At step 57, the Agent 41 starts the timer 42. Then, for each model-filter in Set-B, Procedure-A is performed at step 58. Referring briefly to FIG. 4, there is shown a flow chart illustrating the steps of Procedure-A. Based on the subject model-filter, the Agent finds all downstream model-filters at step 61. Using the network of FIG. 1 as a sample network, with reference to F2, the downstream filters are F5, F8, F9, F6,and F10. For each found model-filter, the Agent determines at step 62 whether the model-filter is a member of Set-B. If not, the method moves ahead to step 65. If a found model-filter is a member of Set-B, the method moves to step 63 where the Agent places the subject model-filter identifier in the Bag of the found model-filter. At step 64, the Agent sets the Send-flag of the subject model-filter to TRUE.

The method then moves to step 65 where it is determined whether the found downstream model-filter is adjacent to the requesting consumer. If not, the method moves ahead to step 67. If the found downstream model-filter is adjacent to the requesting consumer, the method moves to step 66 where the Agent 41 places the subject model-filter identifier in the Bag of the found model-filter that is adjacent to the requesting consumer. If all downstream model-filters have not been checked at step 67, the method moves to step 68 where the Agent finds the next downstream model-filter. The method then returns to step 62. When all of the downstream model-filters have been checked, the method returns to FIG. 3A and continues at step 69.

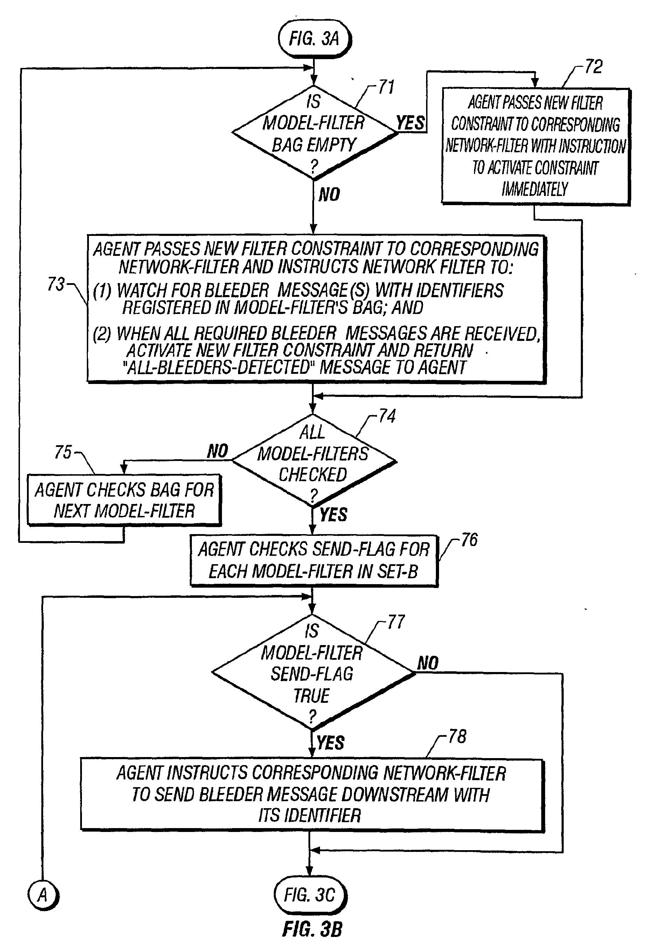

At step 69, the Agent 41 checks the Bag for each model-filter in Set-B. The method then moves to FIG. 3B, step 71 where, for each model-filter in Set-B, it is determined whether the Bag empty. If the Bag for a particular model-filter is empty, the method moves to step 72 where the Agent passes the new filter constraint to the model-filter's corresponding network-filter. The Agent includes an instruction for the network-filter to activate the filter constraint immediately. The method then moves ahead to step 74.

If the subject model-filter's Bag is not empty, the method moves to step 73 where the Agent 41 passes the new filter constraint to the corresponding network-filter, and instructs the corresponding network-filter to perform two functions. First, the network-filter is instructed to watch for bleeder message(s) bearing identifiers that are registered in the subject model-filter's Bag. The Agent also instructs the network-filter to activate the new filter constraint and return a special message to the Agent called the "all-bleeders-detected" message whenever the network-filter has detected all required bleeder messages. At step 74, it is determined whether all of the model-filters in Set-B have been checked. If not, the method moves to step 75 where the Agent checks the Bag for the next modelfilter in Set-B. The method then returns to step 71.

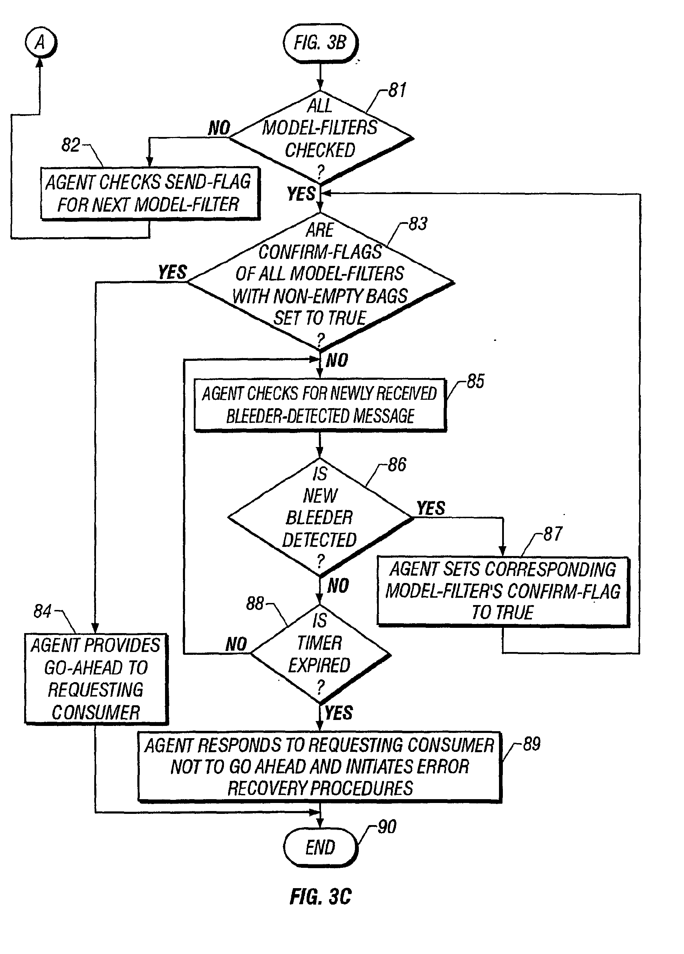

When it is determined that all of the model-filters in Set-B have been checked, the method moves to step 76 where the Agent 41 begins to check the status of the Send-flag for each model-filter in Set-B. For each model-filter, the Agent determines at step 77 whether the Send-flag is TRUE. At 78, for each model-filter whose Send-flag is TRUE, the Agent instructs the corresponding network-filter to send a bleeder message downstream with the network-filter's identifier. The method then moves to FIG. 3C, step 81 where it is determined whether all of the model-filters in Set-B have been checked. If not, the method moves to step 82 where the Agent checks the status of the Send-flag for the next model-filter in Set-B. The method then returns to step 77 of FIG. 3B.

When all of the model-filters in Set-B have been checked, the method moves to step 83 where it is determined whether the Confirm-flags of all model-filters that have non-empty bags are set to TRUE. If so, the method moves to step 84 where the Agent 41 provides a go-ahead to the requesting consumer, and the contract is then established. If all of the Confirm-flags are not set to TRUE, the method moves from step 83 to step 85 where the Agent waits for bleeder-detected message(s) from network-filters. If it is determined at step 86 that the Agent receives a bleeder-detected message from a network-filter, the method moves to step 87 where the Agent sets the corresponding model-filter's Confirm-flag to TRUE. The method then returns to step 83.

The Agent continues to wait for bleeder-detected message(s) from network-filters until the Confirm-flags of all model-filters that have non-empty bags are set to TRUE, or the timer 42 expires. Therefore, at step 88, it is determined whether the timer has expired. If not, the method returns to step 85. However, if the timer expires, the method moves to step 89 where the Agent responds to the requesting consumer not to go-ahead, and the contract is not established. The Agent initiates error recovery procedures, and the method then ends at 90.

It is thus believed that the operation and construction of the present invention will be apparent from the foregoing description. While the method and Agent shown and described has been characterized as being preferred, it will be readily apparent that various changes and modifications could be made therein without departing from the scope of the invention as defined in the following claims.

## Claims

1. A method of deploying new filter constraints in a plurality of network-filters in an Event Channel Network (ECN) in which an Agent calculates the filter constraints and their placement in the ECN, said method comprising the steps of:
implementing in the Agent, a network model that includes a plurality of model-filters, each model-filter having a corresponding network-filter in the ECN;
identifying by the Agent, the model-filters affected by the new filter constraints; and
passing the new filter constraints to the network-filters corresponding to the identified model-filters.

2. The method of deploying new filter constraints of claim 1 wherein the step of implementing a network model includes implementing models of:
all ECN nodes, links, and associated filters;
all event producers with the event types that they offer; and
all consumers with the event types to which they subscribe.

3. The method of deploying new filter constraints of claim 2 further comprising the steps of:
receiving in each network-filter, a confirmation that all of the network-filter's upstream network-filters have received the new filter constraints; and
activating the new filter constraints in the network-filters.

4. The method of deploying new filter constraints of claim 3 wherein the new filter constraints are needed because of a new event type requested by a consumer, and the method further comprises the steps of:
providing by the Agent, a go-ahead to the requesting consumer; and
establishing a contract with the requesting consumer to deliver the requested event type.

5. A method of deploying new filter constraints in a plurality of network-filters in an Event Channel Network (ECN) in which an Agent calculates the filter constraints and their placement in the ECN, said method comprising the steps of:
implementing in the Agent, a network model that includes a plurality of model-filters, each model-filter having:
a corresponding network-filter in the ECN;
an associated Send-flag indicating whether the model-filter's corresponding network-filter should send a bleeder message;
an associated Bag containing identifiers of upstream network-filters that will send bleeder messages; and
an associated Confirm-flag indicating whether the Agent has received an all-bleeders-detected message from the corresponding network-filter;
initializing each Send-flag and Confirm-flag to FALSE, and each Bag to EMPTY;
for each subject model-filter in the network model, finding all downstream model-filters;
placing an identifier of the subject model-filter in the Bag of each found downstream model-filter;
setting the subject model-filter's Send-flag to TRUE;
passing a new filter constraint to each network-filter corresponding to each model-filter having an identifier in its Bag;
instructing each network-filter corresponding to a model-filter having its Send-flag set to TRUE to send a bleeder message to downstream network-filters, said bleeder message including the sending network-filter's identifier;
instructing each network-filter receiving a new filter constraint to watch for bleeder messages containing identifiers that are in the Bag of the network-filter's corresponding model-filter; and
instructing each network-filter receiving a new filter constraint to activate the new filter constraint when the network-filter has received all required bleeder messages.

6. The method of deploying new filter constraints of claim 5 wherein the new filter constraints are needed because of a new event type requested by a consumer, and the method further comprises the steps of:
setting each model-filter's Confirm-flag to TRUE when the model-filter's corresponding network-filter detects a bleeder message;
providing by the Agent, a go-ahead to the requesting consumer when the Confirm-flags of all model-filters with non-empty Bags are set to TRUE; and
establishing a contract with the requesting consumer to deliver the requested event type.

7. The method of deploying new filter constraints of claim 6 further comprising, after the step of initializing each Send-flag and Confirm-flag to FALSE, and each Bag to EMPTY, the steps of:
starting a timer by the Agent; and
if the timer expires before the Confirm-flags of all model-filters with non-empty Bags are set to TRUE:
sending a response from the Agent to the requesting consumer not to go ahead; and
initiating error recovery procedures.

8. An Agent for calculating and deploying new filter constraints in a plurality of network-filters in an Event Channel Network (ECN), said Agent comprising:
a network model that includes a plurality of model-filters, each model-filter having a corresponding network-filter in the ECN;
means for identifying by the Agent, the model-filters affected by the new filter constraints; and
means for passing the new filter constraints to the network-filters corresponding to the identified model-filters.

9. The Agent for calculating and deploying new filter constraints of claim 8 wherein the network model also includes models of:
all ECN nodes and links associated with the network-filters;
all event producers with the event types that they offer; and
all consumers with the event types to which they subscribe.

10. The Agent for calculating and deploying new filter constraints of claim 9 further comprising:
means for receiving from each network-filter, a confirmation that all of the network-filter's upstream network-filters have received the new filter constraints; and
means for activating the new filter constraints in the network-filters.

11. The Agent for calculating and deploying new filter constraints of claim 10 wherein the new filter constraints are needed because of a new event type requested by a consumer, and the Agent further comprises:
means for providing by the Agent, a go-ahead to the requesting consumer; and
means for establishing a contract with the requesting consumer to deliver the requested event type.
